# EUROPEAN PATENT SPECIFICATION

(11) **EP 2 607 719 B1**
(45) Date of publication and mention of the grant of the patent: **03.08.2016**
(21) Application number: 11194566.3
(22) Date of filing: 20.12.2011
(51) Int. Cl.: F16B 5/02

(54) **Blind fastener**
Blindbefestigung
Fixation de volet

(43) Date of publication of application: 26.06.2013
(73) Proprietor: EV IP LP, Dover, County of Kent, DE 19901 (US)
(72) Inventor: Gill, Neil, Bradford, Yorkshire BD7 2NF (GB); Gaskell, Mark, Bradford, Yorkshire BD7 2NF (GB); Norris, Douglas, Bradford, Yorkshire BD7 2NF (GB); Williams, Terence, Bradford, Yorkshire BD7 2NF (GB)
(74) Representative: Gray, James

(56) References cited:
- EP-A1- 0 175 273
- DE-A1-102005 026 942
- GB-A- 2 477 361
- US-A1- 2005 210 771

## Description

This invention relates to a blind fastener and particularly to a blind fastener adapter for a conventional screw-threaded nut and screw.

Blind fasteners are well known, and comprise devices insertable from one side through a hole in a member, and having means to anchor the device on the distal side of the hole. A screw-threaded component may be included, to tighten the device to the member. Such fasteners are utilised where access is available from one side only, and may for example clamp members together or be used to provide an anchorage. Typically a blind fastener includes a proximal side screw-threaded component having a screw-threaded distal (or blind) side anchorage arranged for close fitting passage through a hole. Once through the hole, the distal side anchorage changes form so as to resist withdrawal thereof, whereupon the proximal side component is tightened to firmly attach the fastener. The distal side fastener may for example comprise a folding component which is adapted to pass through the hole in folded form, and open out on the distal side to a diameter larger than the hole.

EP0175273 discloses an expanding anchor plug having a cap spring which retains cylindrical segments in relation to a conical expander.

GB2477361 discloses a radially expandable connector assembly having a conical part and a number of part cylindrical members, which displace radially outwards as the conical part is displaced linearly. The part cylindrical members are biased inwardly to contact during an opposite linear action of the conical part.

According to a first aspect of the present invention, there is provided a blind fastener adapter for a conventional screw-threaded nut and screw, the adapter comprising a collar and a segmented ring over the collar, the ring and collar having a tapered interface wherein relative axial movement results in a change of diameter of said ring, said adapter further including a spring adapted to bias said collar and ring into mutual engagement, said collar and ring including means to prevent substantial relative angular movement thereof, said collar being adapted for engagement by a blind side head of said screw in use, and said ring being adapted for blind side engagement of the perimeter of a hole, characterised in that the spring is a coil compression spring that axially biases said collar and ring into mutual engagement in use.

The blind side head may be a nut or the head of a male fastener, such as a machine screw or bolt. The screw may be a threaded stud, or the shank of a male fastener.

According to a second aspect of the present invention, there is provided a blind fastener adapter for a conventional screw-threaded screw, the adapter comprising a collar and a segmented ring over the collar, the ring and collar having a tapered interface wherein relative axial movement results in a change of diameter of said ring, said adapter further including a spring adapted to bias said collar and ring into mutual engagement, said collar and ring including means to prevent substantial relative angular movement thereof, said collar being threaded for engagement by a blind side thread of said screw in use, and said ring being adapted for blind side engagement of the perimeter of a hole, characterised in that the spring is a coil compression spring that axially biases said collar and ring into mutual engagement in use.

Preferably the ring and collar are fixed against relative rotation by dogs; such dogs may for example comprise protrusions of one of the ring and collar, and mating recesses of the other of ring and collar. In one embodiment protruding rails of the collar extend in the direction of the axis of rotation thereof, and engage in close fitting grooves of the ring.

The ring may have three segments, each segment being restrained by a suitable dog. In a preferred embodiment, each segment is retained against radial separation by the collar, for example by an enlarged head of a rail engageable in an undercut groove. Each segment may comprise an individually separable component retained solely by a suitable form-locking profile.

In a preferred embodiment, the spring may bear directly on said ring in use, and sized to fit closely around said screw.

In a preferred embodiment the fastener may include a further coil compression spring outboard the aforesaid coil compression spring and of a diameter insufficient to pass through a hole for which the fastener is intended. Such a further spring provides frictional bias to provide anti-rotational force for said collar, in use.

The adapter may further include a collared washer at the proximal side of said coil spring. A reduced diameter of said washer being sized to engage closely within the hole for which the fastener is intended, and the washer having an internal recess of sufficient depth to accept said spring when compressed. Such a recess avoids potential coil binding of the spring, which could affect proper tightening of the fastener.

In the preferred embodiment, the ring has a reduced diameter portion at the proximal side so as to present a shoulder. The reduced diameter portion is also sized for close fitting engagement in the hole for which the fastener is intended, and the shoulder bears on the perimeter of the distal side of the hole in use.

A blind fastener adapter according to this invention has the advantage of being retro-fittable to a standard machine screw, for example a bolt. This means that special threaded components are not required, and that standard specification threads, with known material properties can be used. Standard machine screws are relatively inexpensive compared with special forms. Furthermore, standard fixing tools, such as socket spanners, may be used for both standard and blind fasteners. Moreover, a special supply of blind fasteners is unnecessary provided that a supply of suitable adapters is provided for those instances where a blind fastener is required.

Other features will be apparent from the following description of a preferred embodiment shown by way of example only in the accompanying drawings, in which:
Figs. 1 and 2 illustrate in elevation two variants of the fastener adapter of the invention, in combination with a machine screw and nut;
Fig. 3 illustrates an exploded fastener adapter according to the invention in cross section, in combination with a machine screw and nut;
Fig. 4 illustrates in axial section the steps of installation of the blind fastener of the invention;
Fig. 5 corresponds to Fig. 4, and shows the fastener in full side elevation;
Fig. 6 illustrates a suitable form locking arrangement between collar and ring;
Fig. 7 illustrates an alternative embodiment having a load spreading washer;
Fig. 8 shows the embodiment of Fig. 7 in axial section, and in the assembled condition;
Fig. 9 is a further alternative having a fitting spring;
Figs. 10 to 12 show alternative gripping teeth for segments of the segmented ring;
Fig. 13 illustrates in elevation an elastomeric fitting ring of the tapered collar;
Fig. 14 shows a perspective view of a plurality of fastener adapters having differing shouldered washer configurations;
Fig. 15 shows a cross-sectional view of the fastener adapters of figure 14;
Fig. 16 shows a exploded side view of a fastener adapter according to an embodiment of the present invention and a machine screw, and
Fig. 17 shows a cross-sectional view of the fastener adapter and machine screw of figure 16.

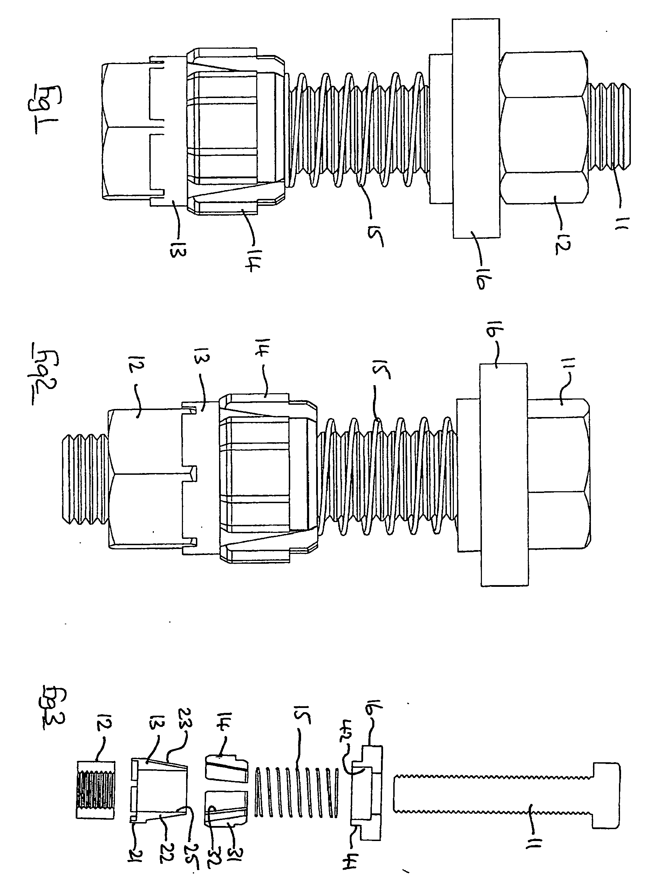

With reference to Figs. 1 to 3, a fastener comprises a conventional hexagonal headed machine screw 11 having a corresponding hexagon nut 12 of the same size. Between the head of the machine screw and the nut the components of an adapter comprise in series, a tapered collar 13, a segmented ring 14, a coil compression spring 15 and a shouldered washer 16. The adapter renders the standard screw and nut suitable for blind (one-sided) installation, and may be filled to the machine screw and nut in either orientation, as illustrated in Figs. 1 and 2, with the proviso that in use the fastener enters a corresponding hole collar first.

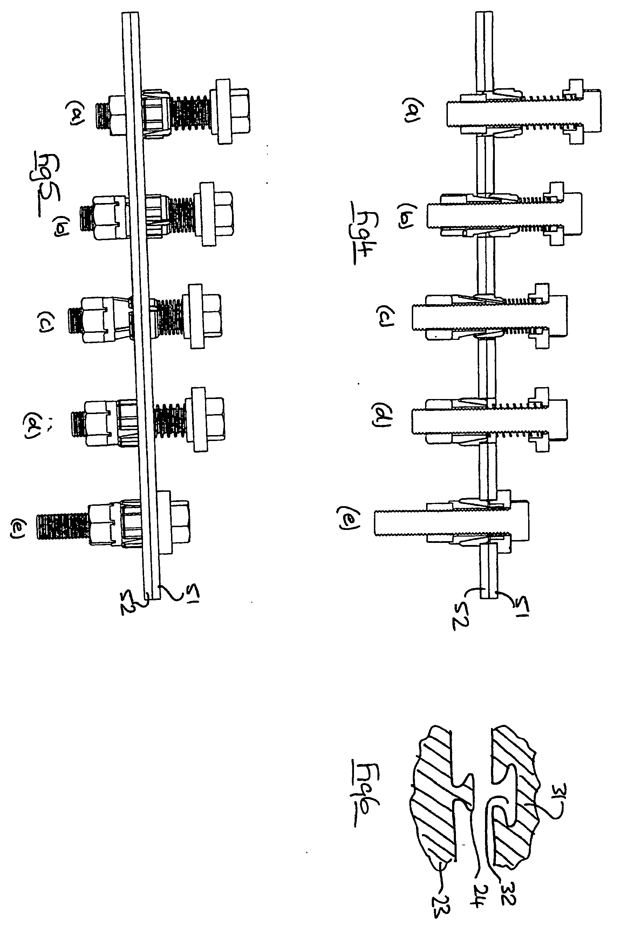

The collar 13 comprises a plain diameter portion 21 for contact with the adjacent hexagon and a tapered portion 22 having three equi-spaced protruding rails 23. Each rail has an enlarged head 24 (Fig. 6) of constant section. The rails 23 extend in the direction of the axis of the fastener, and the bore 25 of the collar allows free movement along the threads of the fastener.

The ring comprises three identical and equi-spaced segments 31 each having an undercut recess 32 (Fig. 6) for sliding engagement with the respective enlarged head 24. The internal surfaces of the segments 31 are arcuate and conical in form, so as to match the conical form of the collar 13. The proximal side of the segments is shouldered so that in use ring 14 fits closely in the distal side of a hole for which the fastener is intended.

The spring 15 is a light wire coil compression spring, which in use biases the segments of the ring 14 towards the collar 13 (downwardly as viewed in Fig. 3).

The shouldered washer 16 has a smaller diameter 41 adapted for close fitting engagement in the proximal side of a hole for which the fastener is intended. The internal diameter 42 is also relieved to accommodate the proximal end of the spring 15, and is of sufficient depth to accept the spring without coil binding. In other words the spring can be fully compressed and housed within the washer 16, for reasons which will become apparent.

In order to convert a standard fastener to blind use, the components of the assembly are assembled in the manner indicated in Fig. 1 or Fig. 2 - the coil spring 15 lightly biases the ring 14 and collar 13 into engagement, and the ring 14 tends to adopt a position at the base of the taper of the collar 13, as illustrated in Figs. 1 and 2. In this condition, the outside diameter of the ring is greater than the plain portion 21 of the collar.

With reference to Figs. 4 and 5, the blind fastener assembly is offered up to a hole, collar first. In the illustrated case a through hole of two plates 51, 52 is provided. The dimensions of the adapter and hexagons are selected so that the distal hexagon and collar 13 pass freely through the hole, but the ring 14 does not (Fig. 4a). Further light insertion pressure causes the spring 15 to collapse (Fig. 4b) as the collar and ring separate the segments 31 move radially inwardly in consequence of the form-locking profile of Fig. 6.

The taper is arranged so that the segments are drawn sufficiently inwardly to eventually pass through the hole (Fig. 4c) under pressure from the spring 15, whereupon the collar and ring become more closely engaged again, which in turn guides the segments to a radially outer condition in which the shouldered portion of the ring engages in the distal side of the hole (Fig. 4d).

The proximal side hexagon may now be turned to tighten the fastener by hand, a slight proximal pull being sufficient to ensure frictional drag on the distal side hexagon. The drag force may be enhanced by suitable raised formations of the areas in contact, or alternatively the collar may be arranged to lightly grip the adjacent hexagon.

Final tightening is by spanner or torque wrench, the spring being fully housed within the shouldered washer so as not to impede engagement of the ring 14 and distal side plate 52.

The hexagons are selected so as to pass through the hole, though it will be understood that this is not a functional requirement for the distal side hexagon. Furthermore hexagon heads are not essential to the invention, and could be replaced by equivalent means such as screwdriver slots, or cap heads incorporating a recessed fastener drive form. Use of the blind fastener according to this invention is intuitive, and accordingly incorrect installation is unlikely.

In the illustrated embodiment, the fastener is used to clamp two plates together. However the invention is also suitable for forming a load bearing attachment in any planar surface of which access to the distal side is restricted. A particular use of the invention is providing fixings to hollow sections.

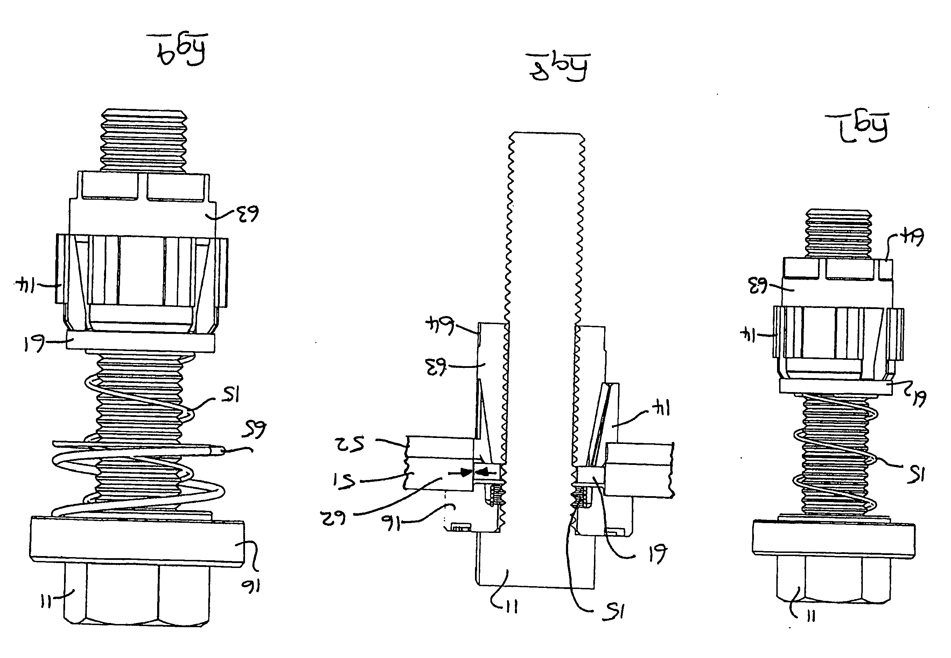

Fig. 7 shows a variation of the embodiment of Figs. 1 to 6, in which the washer 61 is provided on the proximal side of the ring 14, and against which the light spring 15 acts. The washer 61 is selected to be of smaller diameter than the hole for which the fastener is intended, and is preferably a close fit for reasons which will become apparent. The washer 61 may include a circular recess (not shown) on the proximal side to better locate the spring so as to avoid contact with the screw threads.

The washer 61 ensures synchronised movement of the segments and, as illustrated in Fig. 8, provides additional support against lateral shearing and bearing forces which tend to tip the fastener in the hole, and are illustrated by arrows 62. The thickness of the additional washer 61 is in practice selected to suit the thickness of the hole for which the fastener is intended, taking into account an allowance for the spigot diameter of the standard shouldered washer 16 and the collar 14. Fig. 8 clearly shows how the light spring 15 is housed in a recess of the washer 16 when the components are in the assembled condition.

Figs. 7 and 8 also illustrate that it is possible to combine the nut 12 and collar 13 into a single component comprising a threaded cone 63. External flats 64 or like features may be provided on the cone blank to facilitate holding during thread tapping.

Fig. 9 illustrates a further modification whereby an additional coil compression spring 65 is provided external to the light spring 15, and oppositely wound to avoid coil binding.

During assembly, the additional spring 65 bears on the proximal side of the material in which the hole is formed to ensure sufficient anti-rotational friction force between the distal side and the segmented ring 14. This feature may avoid the need to give a slight outward pull on the fastener during initial fastening, and can be useful where access is restricted. The additional spring 65 may be used in conjunction with the washer 61, or not, but is in any event provided with a corresponding recess in the shouldered washer 16 to obviate coil binding where the fastener is fully tightened.

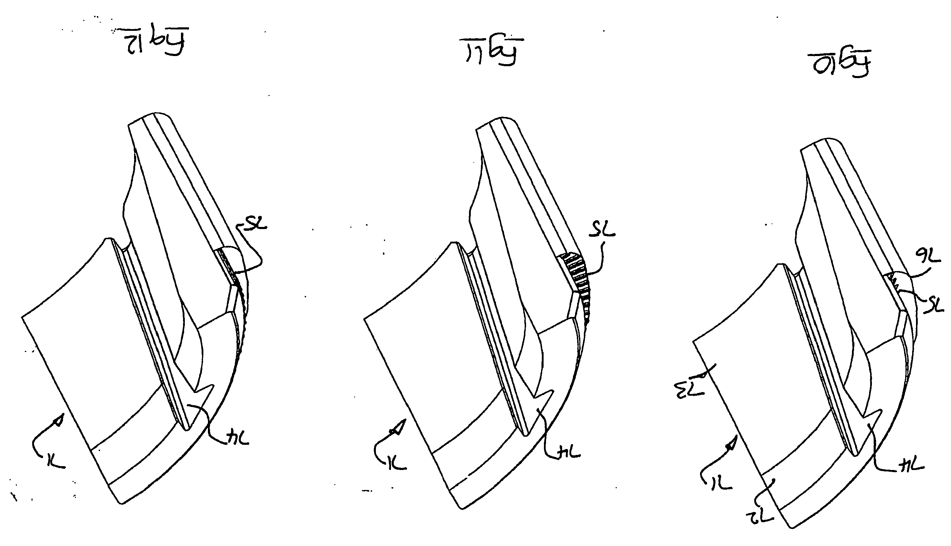

A somewhat schematic representation of a preferred segment 71 is illustrated in Fig. 10 and comprises a plain diameter portion 72, a tapered portion 73 and a dovetail recess 74 which corresponds to a suitable form of the collar 13. Gripping teeth 75 of suitable form are provided at the shoulders 76 so as to engage the distal side of the hole in use, and contribute to anti-rotation during initial assembly.

The gripping teeth 75 may extend radially to a partial extent (Fig. 10), radially to a full extent (Fig. 11), axially to a partial or full extent (Fig. 12), or in both radial and axial directions as required by the circumstances of the installation.

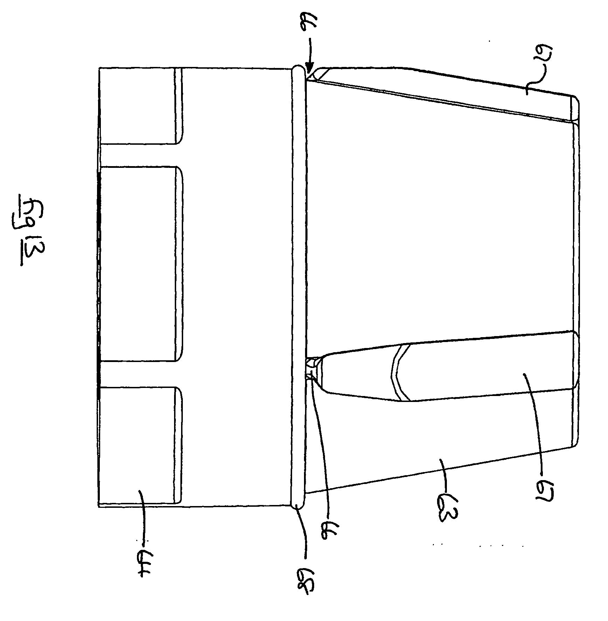

A further enhancement is illustrated in Fig. 13, in which a composite collar and nut 63 has three equi-spaced male dovetail projections 67 at the base of which are respective groove 66. Retained by the grooves is a soft elastomeric ring 68, for example a synthetic rubber O-ring. The axial position of the grooves and the diameter of the O-ring is selected so that in the uninstalled condition, the distal side of the segmented ring 14 is prevented from bottoming on the collar, so that the outside diameter of the segmented ring is just less than the diameter of the hole. In this condition, the fastener will pass freely through to the blind side.

However, upon tightening, the ring 68 collapses or is displaced to permit the segments to come into functional engagement with the collar, either directly or through compression of the ring, and thus cause the radial movement necessary for engagement of the segmented ring 14 with the distal side of the hole. The ring 68 is essentially a single use fitting component intended to provide smooth passage of the fastener to the distal side of the hole.

It will be understood that the fitting ring 68 may also be used with a separate nut, the location feature of the ring being provided on the collar.

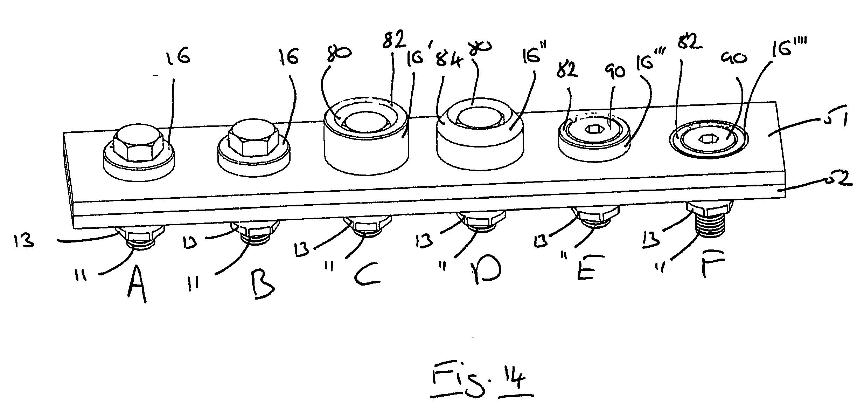

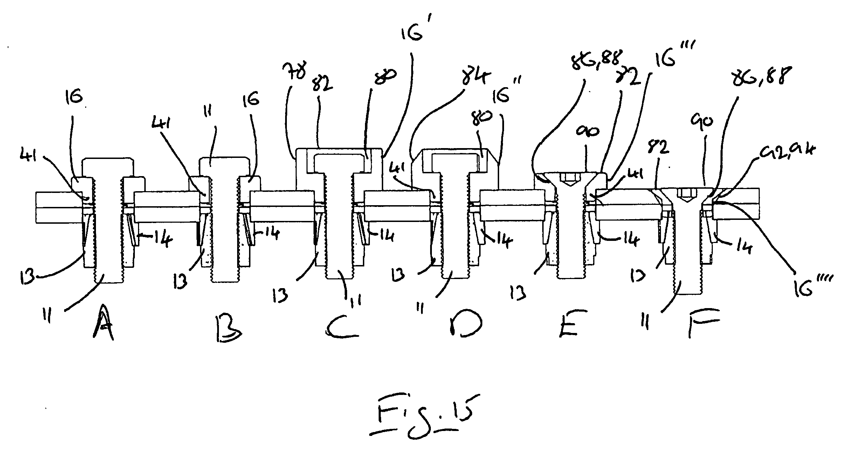

It will further be appreciated that the shouldered washer 16 may have different configurations depending upon the application of the blind fastener. Figures 14 and 15 illustrate a plurality of different possible shouldered washer configurations. The examples shown are not intended to be limiting, but merely illustrate a selection of possible configurations. In the examples shown in figures 14 and 15 the nut 12 of the screw 11 is not shown

Examples A and B of figures 14 and 15 show a shouldered washer 16 having a configuration substantially has hereinbefore described. The washer 16 includes a reduced diameter portion 41 adapted for close fitting to the sides of the hole through which fastener extends.

Example C shows a shouldered washer 16' having a peripheral wall 78 which defines a recess 80. The hexagonal head of the machine screw 11 is received in the recess with sufficient clearance that an appropriately sized socket or box spanner can fit over the head. The height of the wall 78 is such that uppermost edge 82 of the shouldered washer 16' extends above the head of the machine screw 11.

Example D shows a shouldered washer 16" which is similar to that of example C. The washer 16" differs in that the peripheral wall 78 is tapered 84 such that the washer 16" has a semi-domed appearance.

Example E shows a shouldered washer 16"' which is adapted for use with a countersunk screw 11. The washer 16"' is provided with a through aperture 86 having a tapered portion 88 which accommodates the corresponding taper of the screw 11 such that the uppermost face 90 of the screw 11 is aligned substantially at the same level as the uppermost edge 82 of the washer 16'".

Example F shows a further example of a shouldered washer 16"" adapted for use with a countersunk screw 11. In this example the shouldered washer 16"" is configured such that it is received in a countersunk hole 92, with the result that both the washer 16"" and head of the countersunk screw 11 are substantially flush with the upper plate 51. The washer 16"" is provided with tapered outer surface 94 which is dimensioned so as to be received within the countersunk hole 92.

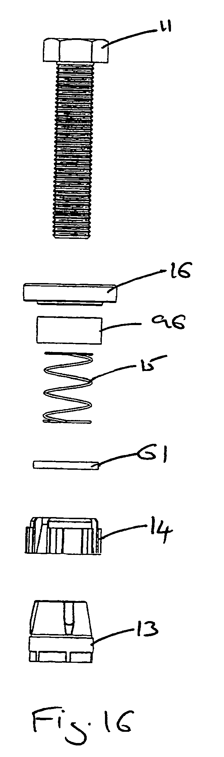

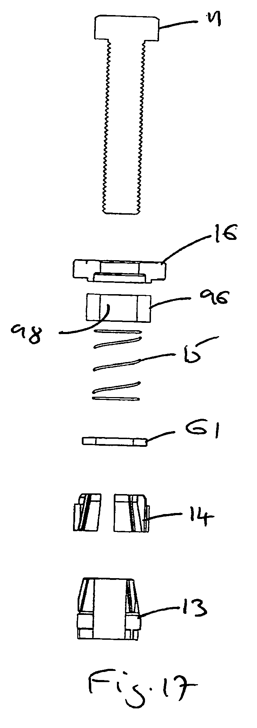

Figures 16 and 17 show an alternative embodiment of a fastener adapter and machine screw in accordance with the present invention. Features common to the previously described embodiments are identified with like reference numerals. The hexagon nut 12 is not shown.

The fastener adapter includes a shear bush 96 which is positioned intermediate the shouldered washer 16 and the spring 15. The shear bush 96 is substantially tubular and includes a through bore 98. The through bore 98 may be plain such that the bush 96 is a sliding fit over the thread of the screw 11. Alternatively, the through bore 98 may be provided with a thread such that the bush 96 may be threaded on to the thread of the screw. In use, the bush 96 is positioned in the hole extending through the two plates 51,52 so as to increase the shear resistance of the blind fastener in the shear plane between the plates 51,52 being fastened. It will be appreciated that the length of the bush 96 is dependent upon the thickness of the plates 51,52.

Several modifications and alternatives have been described, and may be used independently or in combination to provide the required technical characteristics for a particular installation.

## Claims

1. A blind fastener adapter for a conventional screw-threaded nut (12) and screw (11), the adapter comprising a collar (13) and a segmented ring (14) over the collar (13), the ring (14) and collar (13) having a tapered interface wherein relative axial movement results in a change of diameter of said ring (14), said adapter further including a spring (15) adapted to bias said collar (13) and ring (14) into mutual engagement, said collar (13) and ring (14) including means to prevent substantial relative angular movement thereof, said collar (13) being adapted for engagement by a blind side head of said screw (11) in use, and said ring (14) being adapted for blind side engagement of the perimeter of a hole, **characterised in that** the spring (15) is a coil compression spring that axially biases said collar (13) and ring (14) into mutual engagement in use.

2. A blind fastener adapter as claimed in claim 1 wherein the blind side head is a nut (12) or the head of a male fastener, such as a machine screw or bolt (11).

3. A blind fastener adapter for a conventional screw-threaded screw (11), the adapter comprising a collar (13) and a segmented ring (14) over the collar (13), the ring (14) and collar (13) having a tapered interface wherein relative axial movement results in a change of diameter of said ring (14), said adapter further including a spring (15) adapted to bias said collar (13) and ring (14) into mutual engagement, said collar (13) and ring (14) including means to prevent substantial relative angular movement thereof, said collar (13) being threaded for engagement by a blind side thread of said screw (11) in use, and said ring (14) being adapted for blind side engagement of the perimeter of a hole, **characterised in that** the spring (15) is a coil compression spring that axially biases said collar (13) and ring (14) into mutual engagement in use.

4. A blind fastener adapter as claimed in any preceding claims wherein the screw (11) is a threaded stud, or the shank of a male fastener.

5. A blind fastener adapter as claimed in any preceding claim wherein the ring (14) and collar (13) are fixed against relative rotation by dogs.

6. A blind fastener adapter as claimed in claim 5 wherein the dogs comprise protrusions of one of the ring (14) and collar (13), and mating recesses of the other of the ring (14) and collar (13).

7. A blind fastener adapter as claimed in claim 6 wherein protruding rails (23) of the collar (13) extend in the direction of the axis of rotation thereof, and engage in close fitting grooves of the ring (14).

8. A blind fastener adapter as claimed in any of claims 5 to 7 wherein the ring (14) has three segments (31), each segment (31) being restrained by a suitable dog.

9. A blind fastener adapter as claimed in claim 8 wherein each segment (31) is retained against radial separation by the collar (13).

10. A blind fastener adapter as claimed in claim 9 wherein each segment (31) is retained against radial separation by an enlarged head (24) of a rail (23) engageable in an undercut groove (32).

11. A blind fastener adapter as claimed in claim 1 or claim 2 wherein the spring (15) bears directly on said ring (14) in use, and is sized to fit closely around said screw.

12. A blind fastener adapter as claimed in any of claims 1 to 10 and further including a collared washer (16) at the proximal side of said coil spring (15).

13. A blind fastener adapter as claimed in claim 12 wherein a reduced diameter (41) of said washer (16) is sized to engage closely within the hole for which the fastener is intended to fit, and the washer (16) has an internal recess of sufficient depth to accept said spring (15) when compressed.

14. A blind fastener adapter as claimed in claim 3 and further including a tubular bush (96) positioned between the collared washer (16) and the proximal side of said coil spring.

15. A blind fastener adapter as claimed in any preceding claim wherein the ring (14) has a reduced diameter portion at the proximal side so as to present a shoulder, the reduced diameter portion also being sized for close fitting engagement in the hole for which the fastener is intended, and the shoulder bearing on the perimeter of the distal side of the hole in use.

16. A blind fastener adapter as claimed in claim 3 wherein a further washer (61) is provided proximally of the segmented ring (14) so as to distribute spring loads applied thereto.

## Patentansprüche

1. Blindbefestigungsadapter für eine konventionelle Schraubengewindemutter (12) und Schraube (11), der Adapter umfasst einen Kragen (13) und einen segmentierten Ring (14) über dem Kragen (13), der Ring (14) und der Kragen (13) besitzen eine verjüngte Schnittstelle, wobei eine relative Axialbewegung in einer Änderung des Durchmessers des Rings (14) resultiert, ferner umfasst der Adapter eine Feder (15), die dazu geeignet ist, den Kragen (13) und den Ring (14) in gegenseitigen Eingriff vorzuspannen, der Kragen (13) und der Ring (14) umfassen Mittel, um eine wesentliche relative Winkelbewegung davon zu verhindern, der Kragen (13) ist geeignet für ein Eingreifen eines blindseitigen Kopfes der Schraube (11) im Gebrauch, und der Ring (14) ist geeignet für einen blindseitigen Eingriff einer Lochumfassung, **dadurch gekennzeichnet, dass** die Feder (15) eine Schraubendruckfeder ist, die den Kragen (13) und den Ring (14) im Gebrauch in gegenseitigen Eingriff axial vorspannt.

2. Blindbefestigungsadapter nach Anspruch 1, wobei der blindseitige Kopf eine Mutter (12) ist oder der Kopf eines männlichen Befestigungselements, wie der einer Maschinenschraube oder eines Bolzens (11).

3. Blindbefestigungsadapter für eine konventionelle Schraubengewindeschraube (11), der Adapter umfasst einen Kragen (13) und einen segmentierten Ring (14) über dem Kragen (13), der Ring (14) und der Kragen (13) haben eine verjüngte Schnittstelle, wobei eine relative Axialbewegung in einer Änderung des Durchmessers des Rings (14) resultiert, ferner umfasst der Adapter eine Feder (15), die dazu geeignet ist, den Kragen (13) und den Ring (14) in gegenseitigen Eingriff vorzuspannen, der Kragen (13) und der Ring (14) umfassen Mittel, um eine wesentliche relative Winkelbewegung davon zu verhindern, der Kragen (13) ist mit einem Gewinde versehen für den Eingriff eines blindseitigen Gewindes der Schraube (11) im Gebrauch, und der Ring (14) ist geeignet für einen blindseitigen Eingriff einer Lochumfassung, **dadurch gekennzeichnet, dass** die Feder (15) eine Schraubendruckfeder ist, die den Kragen (13) und den Ring (14) im Gebrauch in gegenseitigen Eingriff axial vorspannt.

4. Blindbefestigungsadapter nach einem der vorhergehenden Ansprüche, wobei die Schraube (11) ein Gewindestift oder der Schaft eines männlichen Befestigungselements ist.

5. Blindbefestigungsadapter nach einem der vorhergehenden Ansprüche, wobei der Ring (14) und der Kragen (13) durch Anschläge gegen eine relative Drehung befestigt sind.

6. Blindbefestigungsadapter nach Anspruch 5, wobei die Anschläge Vorsprünge entweder auf dem Ring (14) oder dem Kragen (13) und passende Vertiefungen entweder auf dem Ring (14) oder dem Kragen (13) umfassen.

7. Blindbefestigungsadapter nach Anspruch 6, wobei vorstehende Schienen (23) des Kragens (13) sich in Richtung der Rotationsachse erstrecken und in nahe liegende passende Vertiefungen des Rings (14) eingreifen.

8. Blindbefestigungsadapter nach einem der Ansprüche 5 bis 7, wobei der Ring (14) drei Segmente (31) aufweist und jedes Segment (31) durch einen passenden Anschlag gehalten ist.

9. Blindbefestigungsadapter nach Anspruch 8, wobei jedes Segment (31) gegen eine radiale Trennung durch den Kragen (13) gehalten ist.

10. Blindbefestigungsadapter nach Anspruch 9, wobei jedes Segment (31) gegen eine radiale Trennung durch einen vergrößerten, in eine hinterschnittene Nut (32) eingreifbaren Kopf (24) einer Schiene (23) gehalten ist.

11. Blindbefestigungsadapter nach Anspruch 1 oder 2, wobei im Gebrauch die Feder (15) direkt auf dem Ring (14) aufliegt und derart bemessen ist, damit sie eng um die Schraube passt.

12. Blindbefestigungsadapter nach einem der Ansprüche 1 bis 10 und ferner umfassend eine Scheibe (16) mit Kragen an der nahen Seite der Schraubenfeder (15).

13. Blindbefestigungsadapter nach Anspruch 12, wobei ein verkleinerter Durchmesser (41) der Scheibe (16) derart bemessen ist, um eng innerhalb des Lochs einzugreifen, für welches die Befestigung vorgesehen ist zu passen, und die Scheibe (16) eine innere Ausnehmung mit ausreichender Tiefe aufweist, um die Feder (15) aufzunehmen, wenn diese zusammengedrückt ist.

14. Blindbefestigungsadapter nach Anspruch 3 und ferner umfassend eine rohrförmige Buchse (96), die zwischen der Scheibe (16) mit Kragen und der nahen Seite der Schraubenfeder positioniert ist.

15. Blindbefestigungsadapter nach einem der vorhergehenden Ansprüche, wobei der Ring (14) an der nahen Seite einen Abschnitt mit verkleinertem Durchmesser aufweist, um eine Schulter zu bilden, und der Abschnitt mit verkleinertem Durchmesser auch derart bemessen ist, um eng in das Loch einzugreifen, für welches die Befestigung vorgesehen ist, und im Gebrauch die Schulter auf der Umfassung der entfernten Seite des Lochs aufliegt.

16. Blindbefestigungsadapter nach Anspruch 3, wobei eine weitere Scheibe (61) nahe des segmentierten Rings (14) vorgesehen ist, um die darauf wirkenden Federkräfte zu verteilen.

## Revendications

1. Adaptateur de fixation borgne pour un écrou fileté (12) et une vis (11) classiques, l'adaptateur comprenant un collier (13) et une bague segmentée (14) sur le collier (13), la bague (14) et le collier (13) ayant une interface effilée, un mouvement axial relatif aboutissant à un changement de diamètre de ladite bague (14), ledit adaptateur incluant en outre un ressort (15) adapté pour solliciter ledit collier (13) et ladite bague (14) en engagement mutuel, ledit collier (13) et ladite bague (14) incluant un moyen pour en empêcher un mouvement angulaire relatif substantiel, ledit collier (13) étant adapté pour un engagement par une tête côté borgne de ladite vis (11) en service, et ladite bague (14) étant adaptée pour un engagement côté borgne du périmètre d'un trou, **caractérisé en ce que** le ressort (15) est un ressort de compression hélicoïdal qui sollicite axialement en service ledit collier (13) et ladite bague (14) en engagement mutuel.

2. Adaptateur de fixation borgne selon la revendication 1, dans lequel la tête côté borgne est un écrou (12) ou la tête d'une fixation mâle, telle qu'une vis ou un boulon mécanique (11).

3. Adaptateur de fixation borgne pour une vis filetée (11) classique, l'adaptateur comprenant un collier (13) et une bague segmentée (14) sur le collier (13), la bague (14) et le collier (13) ayant une interface effilée, un mouvement axial relatif aboutissant à un changement de diamètre de ladite bague (14), ledit adaptateur incluant en outre un ressort (15) adapté pour solliciter ledit collier (13) et ladite bague (14) en engagement mutuel, ledit collier (13) et ladite bague (14) incluant un moyen pour en empêcher un mouvement angulaire relatif substantiel, ledit collier (13) étant fileté pour un engagement par un filetage côté borgne de ladite vis (11) en service, et en ladite bague (14) étant adaptée pour un engagement côté borgne du périmètre d'un trou, **caractérisé en ce que** le ressort (15) est un ressort de compression hélicoïdal qui sollicite axialement en service ledit collier (13) et ladite bague (14) en engagement mutuel.

4. Adaptateur de fixation borgne selon l'une quelconque des revendications précédentes, dans lequel la vis (11) est un goujon fileté, ou la tige d'une fixation mâle.

5. Adaptateur de fixation borgne selon l'une quelconque des revendications précédentes, dans lequel la bague (14) et le collier (13) sont fixés vis-à-vis d'une rotation relative par des griffes.

6. Adaptateur de fixation borgne selon la revendication 5, dans lequel les griffes comprennent des protubérances de l'un de la bague (14) et du collier (13), et des évidements d'accouplement de l'autre de la bague (14) et du collier (13).

7. Adaptateur de fixation borgne selon la revendication 6, dans lequel des rails protubérants (23) du collier (13) s'étendent dans la direction de l'axe de rotation de celui-ci, et s'engagent dans des rainures ajustées de la bague (14).

8. Adaptateur de fixation borgne selon l'une quelconque des revendications 5 à 7, dans lequel la bague (14) comporte trois segments (31), chaque segment (31) étant retenu par une griffe adéquate.

9. Adaptateur de fixation borgne selon la revendication 8, dans lequel chaque segment (31) est retenu contre une séparation radiale par le collier (13).

10. Adaptateur de fixation borgne selon la revendication 9, dans lequel chaque segment (31) est retenu contre une séparation radiale par une tête agrandie (24) d'un rail (23) pouvant être engagé dans une rainure de dégagement (32).

11. Adaptateur de fixation borgne selon la revendication 1 ou la revendication 2, dans lequel le ressort (15) repose directement sur ladite bague (14) en service, et est dimensionné pour s'ajuster autour de ladite vis.

12. Adaptateur de fixation borgne selon l'une quelconque des revendications 1 à 10, et incluant en outre une rondelle à collier (16) au niveau du côté proximal dudit ressort hélicoïdal (15).

13. Adaptateur de fixation borgne selon la revendication 12, dans lequel un diamètre réduit (41) de ladite rondelle (16) est dimensionné pour s'engager étroitement au sein du trou pour lequel la fixation est destinée à s'ajuster, et la rondelle (16) a un évidement interne de profondeur suffisante pour accepter ledit ressort (15) une fois comprimé.

14. Adaptateur de fixation borgne selon la revendication 3, et incluant en outre une douille tubulaire (96) positionnée entre la rondelle à collier (16) et le côté proximal dudit ressort hélicoïdal.

15. Adaptateur de fixation borgne selon l'une quelconque des revendications précédentes, dans lequel la bague (14) a une portion de diamètre réduit au niveau du côté proximal de façon à présenter un épaulement, la portion de diamètre réduit étant également dimensionnée pour un engagement ajusté dans le trou pour lequel la fixation est destinée, et l'épaulement reposant en service sur le périmètre du côté distal du trou.

16. Adaptateur de fixation borgne selon la revendication 3, dans lequel une rondelle supplémentaire (61) est ménagée à proximité de la bague segmentée (14) de manière à répartir des charges de ressort qui lui sont appliquées.
